# FASCICULE DE BREVET EUROPEEN

(11) **EP 3 494 298 B1**
(45) Date de publication et mention de la délivrance du brevet: **05.08.2020**
(21) Numéro de dépôt: 17746157.1
(22) Date de dépôt: 20.06.2017
(51) Int. Cl.: F02D 23/00, F02B 29/04, F02B 37/00, F02B 37/013, F02B 37/04, F02B 39/10, F28F 27/00

(54) **REFROIDISSEUR D'AIR DE SURALIMENTATION POUR MOTEUR À COMBUSTION INTERNE ET CIRCUIT DE SURALIMENTATION ASSOCIÉ**
INTERCOOLER FÜR EINE AUFGELADENE BRENNKRAFTMASCHINE UND ZUGEORDNETE AUFLADUNGSKREIS
SUPERCHARGING AIR COOLER FOR AN INTERNAL COMBUSTION ENGINE AND ASSOCIATED SUPERCHARGING CIRCUIT

(30) Priorité: 27.06.2016 FR 1655940
(43) Date de publication de la demande: 12.06.2019
(73) Titulaire: Renault S.A.S., 92100 Boulogne-Billancourt (FR); Nissan Motor Co., Ltd., Yokohama-shi, Kanagawa 220-8623 (JP)
(72) Inventeur: MOKADDEM, Mohamed, 78180 Montigny Le Bretonneux (FR)
(74) Mandataire: Rougemont, Bernard
(86) Numéro de dépôt international: PCT/FR2017/051621
(87) Numéro de publication internationale: WO 2018/002478

(56) Documents cités:
- WO-A1-2015/092290
- FR-A1- 2 873 413
- GB-A- 2 480 240
- JP-A- H01 244 114
- US-A- 5 152 144
- US-A1- 2015 114 339

## Description

L'invention a pour objet les systèmes d'alimentation en air pour moteur à combustion interne, et notamment les circuits d'alimentation en air pour moteur suralimenté. De tels systèmes d'alimentation en air comprennent au moins un compresseur, qui peut être typiquement un turbocompresseur, utilisant de l'énergie d'écoulement des gaz brûlés rejetés par le moteur vers l'atmosphère ,pour faire tourner une turbine, la turbine permettant de comprimer de l'air frais -ou un mélange d'air frais et de gaz recyclés- afin d'amener cet air vers un collecteur d'admission du moteur.

Ce premier compresseur peut être secondé par un deuxième compresseur, par exemple un compresseur à moteur électrique, dont l'action peut venir s'ajouter à l'action du premier compresseur quand l'énergie fournie par les gaz d'échappement n'est pas suffisante pour assurer le débit d'air frais entrant souhaité.

Le deuxième compresseur peut typiquement se trouver en aval du premier compresseur, et un circuit de dérivation peut être prévu pour contourner le deuxième compresseur lorsque celui-ci n'est pas utilisé. Une vanne de régulation est généralement prévue pour interdire, lorsque le deuxième compresseur est utilisé, le passage d'air par le circuit de dérivation, et permettre ainsi au deuxième compresseur d'assurer son action. WO 2015/092290 décrit un tel système de suralimentation.

Lorsque seul le turbocompresseur est utilisé, la vanne de régulation est ouverte, quelques fuites de gaz peuvent se produire au travers du deuxième compresseur, mais la majorité du débit d'air se fait au travers du circuit de dérivation. On entend ici par "air comprimé" par le premier et le second compresseur, aussi bien de l'air frais qu'un mélange d'air frais et de gaz d'échappement recyclés/" recirculés".

Le mélange de gaz résultant peut être à une température élevée, qui nécessite un refroidissement de la vanne de régulation. Comme le circuit de dérivation se situe en partie haute du moteur; la vanne nécessite alors une alimentation spécifique en liquide de refroidissement, qui vient ajouter à l'encombrement du système. La longueur de ces circuits spécifiques de refroidissement fait que ce circuit de refroidissement peut être sujet à fuites.

L'invention a pour but de proposer une architecture de circuit d'alimentation en air dont l'encombrement est réduit et le refroidissement de vanne(s) est facilité.

A cette fin, un circuit d'alimentation en air pour moteur à combustion interne, comprend :
- un premier compresseur,
- un deuxième compresseur,
- un échangeur thermique configuré pour refroidir l'air envoyé d'une part par le premier compresseur et d'autre part par le deuxième compresseur, et pour renvoyer cet air vers les cylindres du moteur,
- un premier circuit fluide reliant la sortie du premier compresseur et une entrée de l'échangeur thermique sans passer par le deuxième compresseur,
- et un deuxième circuit fluide reliant la sortie du premier compresseur et une entrée de l'échangeur thermique en passant par le deuxième compresseur.

Le circuit d'alimentation comprend une vanne trois voies en entrée de l'échangeur thermique, configurée pour recevoir sur une première entrée de la vanne le premier circuit fluide et pour recevoir sur une deuxième entrée distincte de la vanne le deuxième circuit fluide.

Le circuit d'alimentation comprend une entrée d'air amont alimentant le premier compresseur, qui peut être une entrée d'air frais ou une entrée de mélange d'air frais et de gaz brûlés par le moteur.

"L'air" peut être éventuellement un mélange d'air et de gaz brûlés. De manière préférentielle, le premier compresseur est un turbocompresseur entraîné en rotation par les gaz brulés du moteur. Le deuxième compresseur peut être par exemple un compresseur à moteur électrique.

De préférence, la seule vanne de régulation ou de coupure disposée sur le premier circuit de fluide est la vanne trois voies en entrée de l'échangeur thermique.

De préférence, la seule vanne de régulation ou de coupure disposée sur le deuxième circuit de fluide, outre le deuxième compresseur, est la vanne trois voies en entrée de l'échangeur thermique.

Avantageusement, le circuit d'alimentation comprend une première canalisation sortant du premier compresseur et se divisant en deux canalisations secondaires de manière à alimenter directement, en parallèle, à la fois le deuxième compresseur et une entrée de la vanne trois voies.

Selon un mode de réalisation préférentiel, l'échangeur thermique comprend un collecteur d'air dont les parois divergent, à partir d'une zone amont du collecteur, vers un volume interne de l'échangeur thermique dédié à la circulation d'air à refroidir dans l'échangeur thermique, l'échangeur comprenant une première arrivée d'air à refroidir et comprenant une deuxième arrivée d'air à refroidir distincte de la première arrivée d'air, la première arrivée d'air et la deuxième arrivée d'air étant branchées chacune sur le collecteur de l'échangeur thermique. De préférence, les deux arrivées sont branchées sur une même zone, de préférence une zone amont, du collecteur. De préférence, les deux arrivées débouchent de part et d'autre d'un même élément de régulation -par exemple un même volet ou un même boisseau-.

De manière particulièrement avantageuse, la vanne trois voies est placée à l'intérieur du collecteur d'air de l'échangeur thermique. De manière préférentielle, la vanne est placée dans une portion amont du collecteur, le collecteur continuant à s'élargir en aval de la vanne.

Selon un mode de réalisation, la vanne trois voies comprend un clapet pivotant configuré pour successivement obturer la première arrivée d'air puis la deuxième arrivée d'air.

L'obturation peut être totale ou partielle, on considère que le clapet obture une des arrivées d'air s'il en réduit la section efficace par rapport à un état antérieur du clapet.

Selon un mode de réalisation préféré, le clapet est maintenu par un ressort de rappel de manière à obturer la première arrivée d'air en absence conjointe de pression d'air dans la première et dans la deuxième arrivée d'air, et la position du clapet est imposée par les différences de pression relatives entre la première arrivée d'air, la deuxième arrivée d'air, et l'aval du collecteur de l'échangeur thermique.

Selon une autre variante de réalisation, on peut utiliser un clapet pivotant commandé électriquement.

La première arrivée d'air peut être avantageusement raccordée à la sortie du premier circuit fluide, ou circuit de dérivation.

Selon un autre mode de réalisation, la vanne trois voies peut comprendre un boisseau rotatif. Le boisseau peut être par exemple commandé électriquement.

Selon un mode de réalisation préféré, l'échangeur thermique comprend un circuit de fluide de refroidissement pour refroidir l'air arrivant en aval du collecteur par la première et par la deuxième arrivée de fluide, le même circuit de fluide de refroidissement de refroidissement passant également au contact de la vanne trois voies. On limite ainsi considérablement l'encombrement lié aux contraintes de refroidissement de la vanne.

Un véhicule selon l'invention comprend un moteur à combustion interne dont les cylindres sont alimentés en air au travers d'un refroidisseur d'air recevant une première arrivée d'air et recevant une deuxième arrivée d'air distincte de la première arrivée d'air, l'échangeur thermique comprenant une vanne trois voies permettant de fermer ou réduire alternativement l'une puis l'autre arrivée d'air.

Quelques buts, caractéristiques et avantages de l'invention apparaîtront à la lecture de la description suivante, donnée uniquement à titre d'exemple non limitatif, et faite en référence aux figures annexées, sur lesquelles :
- La figure 1 est une vue schématique de l'architecture d'un moteur muni d'un circuit d'alimentation en air selon l'art antérieur ;
- La figure 2 est une vue schématique d'un moteur muni d'un circuit d'alimentation en air selon l'invention ;
- La figure 3 est une vue schématique d'un refroidisseur d'air appartenant à un circuit d'alimentation en air selon l'invention.

Les figures 4a, 4b sont des vues schématiques de deux configurations d'un refroidisseur appartenant à un circuit d'alimentation en air selon une autre variante de l'invention.

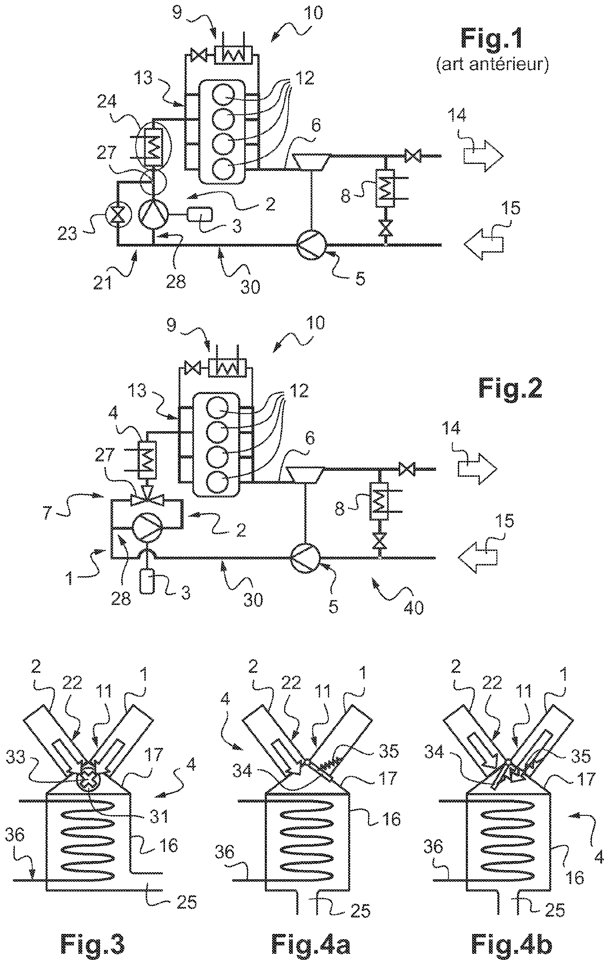

La figure 1 illustre une architecture de moteur à combustion interne, muni d'un circuit d'alimentation en air selon l'art antérieur. Un moteur 10 comprend ainsi des cylindres 12 alimentés en air ou en mélange gazeux par un collecteur d'air 13. Les gaz brûlés sortant des cylindres sont ensuite reçus par la sortie 6 d'un collecteur d'échappement, et traversent alors la turbine d'un premier compresseur ou turbocompresseur 5, avant de partir vers l'atmosphère par une tubulure d'échappement 14. Une partie des gaz d'échappement peut être renvoyée vers l'admission par un circuit de recirculation 9 dit circuit "EGR à haute pression", renvoyant à partir de l'amont de la turbine du turbocompresseur, une partie des gaz d'échappement vers le collecteur d'admission 13. Une autre partie des gaz d'échappement peut être renvoyée vers l'admission par un circuit de recirculation 8 dit circuit " EGR à basse pression", les gaz d'échappement étant alors prélevés en aval de la turbine du turbocompresseur 5, et renvoyés pour être mélangés à de l'air frais arrivant d'une admission d'air frais 15.

Le moteur comporte, au niveau de son circuit d'alimentation en air, un deuxième compresseur, par exemple un compresseur électrique 3. Il comporte aussi un refroidisseur d'air 24 traversé par tous les flux gazeux propulsés par le premier et/ou par le deuxième compresseur. L'air ayant traversé l'échangeur thermique d'air 24 est envoyé vers le collecteur d'air 13.

Le moteur peut comporter, ou ne pas comporter, l'un ou l'autre de chacun des circuits EGR 8 et 9. Dans les différentes configurations envisageables, l'air frais arrivant au niveau de l'admission 15, éventuellement mélangé par la suite aux gaz EGR du circuit 8, est comprimé par le compresseur du turbocompresseur 5 et envoyée dans une canalisation commune 30, qui se sépare ensuite au niveau d'un point de séparation 28, en une deuxième portion de circuit traversant le deuxième compresseur 3 avant d'être envoyé vers l'échangeur thermique d'air 24, et en une première portion de circuit 21 ou circuit de dérivation, traversant une vanne de régulation 23 avant d'arriver au refroidisseur d'air 24, à partir duquel l'air ou le mélange d'air est envoyé vers le collecteur 13.

L'air sortant du turbocompresseur 5 peut donc emprunter un premier circuit de fluide 21, passant par la canalisation commune 30, la vanne de régulation 23, et arrivant au refroidisseur 24 sans passer par le deuxième compresseur.

L'air sortant du turbocompresseur 5 peut également, quand la vanne 23 est fermée, être envoyé dans un deuxième circuit fluide passant par la canalisation commune 30, traversant le deuxième compresseur 3, et arrivant ensuite, sans passer par d'autres vannes de régulation, au refroidisseur d'air 27.

Dans cette configuration connue de l'art antérieur, l'encombrement spatial de la vanne 23 et du système de commande associé, ainsi que les contraintes de refroidissement de la vanne 23, font que le circuit de dérivation 21 passant par la vanne 23 est relativement encombrant et ne peut être positionné librement par rapport aux autres éléments du moteur.

La figure 2 illustre un moteur à combustion interne équipé d'un circuit d'alimentation en air 40 selon l'invention, comprenant également un premier compresseur ou turbocompresseur 5, un deuxième compresseur électrique 3, et un refroidisseur d'air 4 à l'amont du collecteur d'air 13 du moteur 10. A l'entrée de l'échangeur thermique d'air 4 est installée une vanne trois voies 33, qui permet d'envoyer sélectivement ou conjointement dans l'échangeur thermique d'air 4, des gaz arrivant par une première entrée de la vanne trois voies 33 ou des gaz arrivant par une deuxième entrée de la vanne trois voies 33.

On retrouve sur la figure 2 des éléments communs à la figure 1, les mêmes éléments étant désignés par les mêmes références. Le circuit d'alimentation en air selon l'invention comprend, entre le premier compresseur 5 et l'échangeur thermique d'air 4, un premier circuit de fluide 1 ou circuit de dérivation reliant directement la sortie du premier compresseur 5 et la première entrée de la vanne trois voies 33 placée à l'entrée de l'échangeur thermique 4. Le circuit d'alimentation en air selon l'invention comprend, entre le premier compresseur 5 et l'échangeur thermique d'air 4, un deuxième circuit de fluide 2 reliant au travers du deuxième compresseur 3, la sortie du premier compresseur 5 et la deuxième entrée de la vanne trois voies 33 placée à l'entrée de l'échangeur thermique 4. C'est donc une action sur la vanne trois voies 33 qui permet d'imposer ou d'interdire le passage de gaz au travers du premier ou du deuxième circuit de fluide. La sortie de refroidisseur d'air 4 alimente le collecteur 13 d'alimentation en air du moteur 10.

Le turbocompresseur 5 reçoit, au niveau de sa partie compresseur, de l'air frais arrivant d'une alimentation en air frais 15 -air frais qui peut, selon les cas être mélangé à du gaz recyclés par un circuit de recirculation de gaz 8-. Une fois compressé par le turbocompresseur 5, l'air peut emprunter le premier circuit de fluide 1 passant par une canalisation commune 30, arrivant à un point de séparation 28, puis passant par une vanne trois voies 33 disposée à l'entrée de l'échangeur thermique d'air 4.

Dans d'autres modes de fonctionnement correspondant à une autre position de la vanne trois voies 33, le fluide peut passer par un second circuit de fluide 2, le second circuit de fluide passant par la canalisation commune 30, arrivant au point de circulation 28, traversant ensuite le deuxième compresseur 3 puis rejoignant directement la deuxième entrée de la vanne trois voies 33.

Un passage de l'air ou du mélange d'air et de gaz recyclé peut donc être imposé par la vanne trois voies de manière successive sélectivement au travers du premier circuit de fluide 1, sélectivement au travers du deuxième circuit de fluide 2, ou conjointement au travers des deux circuits.

L'échangeur thermique d'air 4 est un refroidisseur fonctionnant suivant des techniques connues, l'air à refroidir étant typiquement envoyé dans un volume de circulation traversé par un circuit d'un second fluide faisant office de fluide de refroidissement. La commande, par exemple électrique ou hydraulique, de la vanne trois voies en fonction des régimes de fonctionnement du moteur, se fait également selon des techniques connues non décrites ici.

Lorsque l'on ne souhaite pas utiliser le deuxième compresseur 3, on coupe le moteur du compresseur 3, on ferme éventuellement l'entrée de la vanne trois voies correspondante, et on ouvre l'autre entrée de la vanne trois voies permettant la circulation au travers du premier circuit de fluide 1. Lorsque l'on souhaite utiliser le deuxième compresseur 3, on ferme l'entrée de la vanne trois voies correspondant au premier circuit de fluide 1 et on ouvre l'entrée de la vanne trois voies autorisant l'accès à partir du deuxième circuit de fluide 2 traversant le compresseur 3, le compresseur 3 étant alors activé. On évite au passage des fuites au travers du circuit de dérivation 1.

En substituant, lors de la conception du circuit d'alimentation en air, à la vanne de régulation 23 placée sur le circuit de dérivation, une vanne 33 située à l'entrée de l'échangeur thermique, on facilite le refroidissement de la vanne, celle-ci pouvant alors utiliser le même circuit de refroidissement ,ou un circuit de refroidissement dérivé, que le circuit de refroidissement de l'échangeur thermique 4 lui-même.

En outre, le circuit de dérivation 1 joignant le point de séparation 28 et la vanne 33, ne comportant qu'une portion de canalisation sans vanne intermédiaire et avec pour seul point triple l'entrée de la canalisation, peut être plus compacte que le circuit de dérivation de l'art antérieur, et nécessite moins de précaution de positionnement par rapport aux autres organes du moteur.

Le système d'assemblage des circuits fluides est facilité, puisque l'on supprime un point triple de rencontre entre la sortie du deuxième compresseur et le circuit de dérivation, au profit de deux arrivées simples de canalisations vers chacune des entrées de la vanne trois voies 33.

La compacité du système peut être encore améliorée si l'on intègre la vanne trois voies 33 au refroidisseur 4. Le principe de cette intégration est illustré en figures 3 et 4.

Tel qu'illustré sur la figure 3, un refroidisseur d'air 4 selon l'invention pouvant être utilisé par exemple dans le circuit d'alimentation en air de la figure 2, comprend un carter 16, définissant le volume de circulation d'air dans l'échangeur thermique 4, une première entrée d'air 11 correspondant à l'arrivée du premier circuit de fluide 1, une deuxième arrivée d'air 22 correspondant à l'arrivée du deuxième circuit de fluide 2, ces deux arrivées se rejoignant au niveau d'une portion étroite d'un collecteur divergeant 17 permettant de répartir les flux d'air entrant dans le carter 16. Le volume intérieur au carter 16 est traversé par un circuit 36 de fluide de refroidissement permettant d'évacuer les calories de l'air traversant le volume défini par le carter 16. L'air ainsi refroidi est ensuite collecté au niveau d'une sortie 25 pour être envoyé vers un collecteur d'air 13 du moteur 10. Une vanne trois voies 33, par exemple de type à boisseau rotatif (31), peut être disposée au point de rencontre des arrivées des circuits fluides 1 et 2. Cette vanne peut être disposée directement à l'intérieur du volume du carter définissant la zone divergente du collecteur 17, sans augmenter l'encombrement de l'échangeur thermique d'air. Le circuit fluide de refroidissement 36 de l'échangeur thermique peut être utilisé pour refroidir la vanne 33. On gagne ainsi l'encombrement de la vanne 33, l'encombrement lié aux contraintes de refroidissement de la vanne et l'encombrement d'amenée du fluide de refroidissement par rapport aux cas où celui-ci doit être amené séparément à la vanne.

Les figures 4a et 4b illustrent un autre mode de réalisation d'un refroidisseur d'air selon l'invention. On retrouve sur les figures 4a 4b des références communes à la figure 3, les mêmes éléments étant désignés par les mêmes références. Dans ce mode de réalisation, la fonction de vanne trois voies est assurée par un clapet 34 basculant permettant d'obturer alternativement, suivant le mode de fonctionnement souhaité en fonction du régime de fonctionnement du moteur, soit l'arrivée du circuit de fluide 1, soit l'arrivée du circuit de fluide 2. Selon certaines variantes de réalisation non représentés, ce clapet peut être piloté par un moteur électrique.

Dans la variante de réalisation illustrée, le clapet est un clapet à ressort, maintenu par un ressort de rappel 35, et dont la position est imposé par les différences relatives de pression entre l'arrivée du premier circuit fluide 1, l'arrivée du deuxième circuit fluide 2, la pression d'air à l'intérieur du collecteur 17, et la force de rappel du ressort 35.

Le ressort 35 est positionné de manière à ce que, en absence de pression fluide, le ressort est maintenu fermé pour ne laisser ouvert que le circuit de fluide 2, correspondant au circuit de fluide traversant le deuxième compresseur. A faible régime du moteur 10, tel qu'illustré en figure 4a, le clapet 34 reste fermé, on actionne le deuxième compresseur 3, et tout l'air comprimé arrive par le circuit de fluide 2 vers l'échangeur thermique 4 en traversant le deuxième compresseur 2. Lorsque le deuxième compresseur 3 est actionné, il crée en effet une surpression par rapport au premier circuit de fluide 1 dans le deuxième circuit de fluide 2 qui s'ajoute à la force de rappel du ressort et contribue à faire basculer, tel qu'illustré sur la figure 4b, le clapet 34 vers une position obturant partiellement ou totalement l'arrivée 22 du deuxième circuit de fluide.

Quand le moteur 10 tourne à puissance plus élevée, la pression d'air traversant la canalisation commune 30 augmente, du fait de la puissance délivrée par le turbocompresseur 5. On désactive le deuxième compresseur 3, qui laisse éventuellement passer un peu de fluide, mais à pression moindre que par le circuit de dérivation 1, est une surpression se crée dans la dernière partie du premier circuit de fluide 1, par rapport à la dernière partie du deuxième circuit de fluide 2. Cette différence de pression permet de faire basculer le clapet 34 de manière à ouvrir l'arrivée du circuit de dérivation 1.

La force de rappel du ressort peut être éventuellement prévue pour que, sur une plage prédéfinie de pression dans le circuit 1, le ressort permette l'ouverture du circuit 1 sans fermer totalement l'arrivée du deuxième circuit de fluide 2, de manière à obtenir une perméabilité globale plus élevée que celle du seul circuit de fluide 1.

L'invention ne se limite pas aux exemples de réalisation décrits, et peut se décliner en de nombreuses variantes. On peut intégrer une vanne de régulation au refroidisseur de fluide sans que celle-ci soit une vanne trois voies, par exemple une simple vanne de coupure permettant d'obturer l'arrivée du circuit de dérivation 1. On peut déporter la vanne de régulation à l'entrée de l'échangeur thermique sans l'intégrer à la structure de l'échangeur thermique. L'architecture décrite peut être utilisée pour réguler les arrivées de flux d'air ayant traversé soit un soit deux compresseurs, les deux compresseur étant de nature différente de celle décrite. La vanne de régulation placée à l'entrée ou dans l'échangeur thermique peut ne pas comporter de circuit de refroidissement. La vanne trois voies peut être conçue pour ouvrir sélectivement soit le premier, soit le deuxième circuit de fluide, sans configuration intermédiaire dédiée au passage conjoint à partir des deux circuits de fluide. Selon encore une autre variante de réalisation, il est possible d'utiliser une vanne trois voies placée à l'entrée du deuxième compresseur, cette vanne trois voies étant placée de manière à diriger à partir de la canalisation commune 30, le fluide soit au travers du deuxième compresseur, lui même relié au refroidisseur, soit directement vers une canalisation de dérivation arrivant reliant la vanne trois voies au refroidisseur d'air sans autre vanne intermédiaire.

L'architecture du système de refroidissement selon l'invention permet d'augmenter la compacité du système d'alimentation en air, permet de démultiplier les possibilités de réglages des flux arrivant au travers d'un deuxième compresseur ou en dérivation du deuxième compresseur, et permet de faciliter et rendre plus compact le refroidissement de la vanne de régulation utilisée.

## Revendications

1. Circuit d'alimentation en air (40) pour moteur (10) à combustion interne, comprenant :
- un premier compresseur (5),
- un deuxième compresseur (3),
- un échangeur thermique (4) configuré pour refroidir l'air envoyé d'une part par le premier compresseur (5) et d'autre part par le deuxième compresseur (3), et pour envoyer cet air vers les cylindres (12) du moteur,
- un premier circuit fluide (1) reliant la sortie du premier compresseur (5) et une entrée de l'échangeur thermique (4) sans passer par le deuxième compresseur (3),
- un deuxième circuit fluide (2) reliant la sortie du premier compresseur (5) et une entrée de l'échangeur thermique (4) en passant par le deuxième compresseur (3),
**caractérisé en ce que** le circuit comprend une vanne trois voies (33) en entrée de l'échangeur thermique (4), recevant sur
- une première entrée de la vanne (33), le premier circuit fluide (1) et recevant sur une deuxième entrée, distincte, de la vanne, le deuxième circuit fluide (2).

2. Circuit d'alimentation selon la revendication 1, dans lequel la seule vanne de régulation ou de coupure disposée sur le premier circuit de fluide (1) est la vanne trois voies (33) en entrée de l'échangeur thermique (4).

3. Circuit d'alimentation selon les revendications 1 ou 2, dans lequel la seule vanne de régulation ou de coupure disposée sur le deuxième circuit de fluide (2), outre le deuxième compresseur (3), est la vanne trois voies (33) en entrée de l'échangeur thermique (4).

4. Circuit d'alimentation selon l'une quelconque des revendications précédentes, dont l'échangeur thermique (4) comprend un collecteur d'air (17) dont les parois divergent, à partir d'une zone amont du collecteur (17), vers un volume interne de l'échangeur thermique dédié à la circulation d'air à refroidir dans l'échangeur thermique, et comprend une première arrivée (11) d'air à refroidir et une deuxième arrivée (22) d'air à refroidir distincte de la première arrivée d'air, la première arrivée d'air (11) et la deuxième arrivée d'air (22) étant branchées sur le même collecteur (17) de l'échangeur thermique (4).

5. Circuit d'alimentation selon la revendication 4, dans lequel la vanne trois voies (33) est placée à l'intérieur du collecteur d'air (17) de l'échangeur thermique (4).

6. Circuit selon la revendication 5, dans lequel la vanne trois voies (33) comprend un clapet pivotant (34) configuré pour successivement obturer la première arrivée d'air (11) puis la deuxième arrivée d'air (22).

7. Circuit selon la revendication 6, dans lequel le clapet (34) est maintenu par un ressort de rappel (35) de manière à obturer la première arrivée d'air (11) en absence conjointe de pression d'air dans la première et dans la deuxième arrivée d'air, et la position du clapet (34) est imposée par les différences de pression relatives entre la première arrivée d'air (11), la deuxième arrivée d'air (22), et l'aval du collecteur (17) de l'échangeur thermique (4).

8. Circuit selon la revendication 5, dans lequel la vanne trois voies (33) comprend un boisseau rotatif (31).

9. Circuit selon l'une quelconque des revendications 4 à 8, l'échangeur thermique (4) comprenant un circuit de fluide de refroidissement (36) pour refroidir l'air arrivant en aval du collecteur (17), à partir de la première (11) et de la deuxième (22) arrivée de fluide, le même circuit de fluide de refroidissement de refroidissement (36) passant également au contact de la vanne trois voies (33).

10. Véhicule comprenant un circuit selon l'une quelconque des revendications 1 à 9.

## Patentansprüche

1. Luftzufuhrkreis (40) für einen Verbrennungsmotor (10), der enthält:
- einen ersten Kompressor (5),
- einen zweiten Kompressor (3),
- einen Wärmetauscher (4), der konfiguriert ist, um die einerseits vom ersten Kompressor (5) und andererseits vom zweiten Kompressor (3) geschickte Luft zu kühlen, und um diese Luft zu den Zylindern (12) des Motors zu schicken,
- einen ersten Fluidkreis (1), der den Ausgang des ersten Kompressors (5) und einen Eingang des Wärmetauschers (4) verbindet, ohne über den zweiten Kompressor (3) zu gehen,
- einen zweiten Fluidkreis (2), der den Ausgang des ersten Kompressors (5) und einen Eingang des Wärmetauschers (4) verbindet, indem er über den zweiten Kompressor (3) geht,
**dadurch gekennzeichnet, dass** der Kreis ein Dreiwegeventil (33) am Eingang des Wärmetauschers (4) enthält, das an einem ersten Eingang des Ventils (33) den ersten Fluidkreis (1) und an einem zweiten, anderen Eingang des Ventils den zweiten Fluidkreis (2) empfängt.

2. Zufuhrkreis nach Anspruch 1, wobei das einzige auf dem ersten Fluidkreis (1) angeordnete Regel- oder Absperrventil das Dreiwegeventil (33) am Eingang des Wärmetauschers (4) ist.

3. Zufuhrkreis nach den Ansprüchen 1 oder 2, wobei das einzige auf dem zweiten Fluidkreis (2) angeordnete Regel- oder Absperrventil außer dem zweiten Kompressor (3) das Dreiwegeventil (33) am Eingang des Wärmetauschers (4) ist.

4. Zufuhrkreis nach einem der vorhergehenden Ansprüche, dessen Wärmetauscher (4) einen Luftsammler (17) enthält, dessen Wände ausgehend von einem stromaufwärts liegenden Bereich des Sammlers (17) zu einem Innenvolumen des Wärmetauschers divergieren, das für die Zirkulation von im Wärmetauscher zu kühlender Luft bestimmt ist, und einen ersten Einlass (11) zu kühlender Luft und einen zweiten Einlass (22) zu kühlender Luft enthält, der sich vom ersten Lufteinlass unterscheidet, wobei der erste Lufteinlass (11) und der zweite Lufteinlass (22) an den gleichen Sammler (17) des Wärmetauschers (4) angeschlossen sind.

5. Zufuhrkreis nach Anspruch 4, wobei das Dreiwegeventil (33) im Inneren des Lufteinlasses (17) des Wärmetauschers (4) angeordnet ist.

6. Kreis nach Anspruch 5, wobei das Dreiwegeventil (33) eine schwenkbare Ventilklappe (34) enthält, die konfiguriert ist, nacheinander den ersten Lufteinlass (11) und dann den zweiten Lufteinlass (22) zu verschließen.

7. Kreis nach Anspruch 6, wobei die Ventilklappe (34) von einer Rückstellfeder (35) gehalten wird, um den ersten Lufteinlass (11) bei gemeinsamer Abwesenheit von Luftdruck im ersten und im zweiten Lufteinlass zu verschließen, und die Stellung der Ventilklappe (34) von den relativen Druckunterschieden zwischen dem ersten Lufteinlass (11), dem zweiten Lufteinlass (22) und dem stromabwärtigen Bereich des Sammlers (17) des Wärmetauschers (4) vorgegeben wird.

8. Kreis nach Anspruch 5, wobei das Dreiwegeventil (33) einen Drehschieber (31) enthält.

9. Kreis nach einem der Ansprüche 4 bis 8, wobei der Wärmetauscher (4) einen Fluidkühlkreis (36) enthält, um die ausgehend vom ersten (11) und vom zweiten (22) Fluideinlass ankommende Luft stromabwärts hinter dem Sammler (17) zu kühlen, wobei der gleiche Fluidkühlkreis (36) ebenfalls in Kontakt mit dem Dreiwegeventil (33) verläuft.

10. Fahrzeug, das einen Kreis nach einem der Ansprüche 1 bis 9 enthält.

## Claims

1. Air supply circuit (40) for an internal combustion engine (10), including:
- a first compressor (5),
- a second compressor (3),
- a heat exchanger (4) configured to cool the air sent on the one hand by the first compressor (5) and on the other hand by the second compressor (3) and to send that air to the cylinders (12) of the engine,
- a first fluid circuit (1) connecting the outlet of the first compressor (5) and an inlet of the heat exchanger (4) without passing through the second compressor (3),
- a second fluid circuit (2) connecting the outlet of the first compressor (5) and an inlet of the heat exchanger (4) by passing through the second compressor (3),
**characterized in that** the circuit includes a three-port valve (33) at the inlet of the heat exchanger (4) receiving, on a first inlet of the valve (33), the first fluid circuit (1) and receiving, on a second, distinct inlet of the valve, the second fluid circuit (2).

2. Supply circuit according to Claim 1, in which the single regulator or cut-off valve disposed on the first fluid circuit (1) is the three-port valve (33) at the inlet of the heat exchanger (4).

3. Supply circuit according to Claim 1 or 2, in which the single regulator or cut-off valve disposed on the second fluid circuit (2), in addition to the second compressor (3), is the three-port valve (33) at the inlet of the heat exchanger (4).

4. Supply circuit according to one of the preceding claims, the heat exchanger (4) of which includes an air manifold (17) the walls of which diverge from a zone upstream of the manifold (17) to an internal volume of the heat exchanger dedicated to the circulation of air to be cooled in the heat exchanger and includes a first intake (11) for air to be cooled and a second intake (22) for air to be cooled distinct from the first intake, the first intake (11) for air and the second intake (22) for air being discharged to the same manifold (17) of the heat exchanger (4).

5. Supply circuit according to Claim 4, in which the three-port valve (33) is placed inside the air manifold (17) of the heat exchanger (4).

6. Circuit according to Claim 5, in which the three-port valve (33) includes a pivoting flap (34) configured successively to block the first air intake (11) and then the second air intake (22).

7. Circuit according to Claim 6, in which the flap (34) is retained by a return spring (35) so as to block the first air intake (11) in the conjoint absence of air pressure in the first and second air intakes and the position of the flap (34) is imposed by the relative pressure differences between the first air intake (11), the second air intake (22) and the downstream side of the manifold (17) of the heat exchanger (4).

8. Circuit according to Claim 5, in which the three-port valve (33) includes a rotary gate (31).

9. Circuit according to any one of Claims 4 to 8, the heat exchanger (4) including a cooling fluid circuit (36) for cooling the air arriving downstream of the manifold (17) from the first fluid intake (11) and the second fluid intake (22), the same cooling fluid circuit (36) also coming into contact with the three-port valve (33).

10. Vehicle comprising a circuit according to any one of Claims 1 to 9.
